# EUROPEAN PATENT APPLICATION

(11) **EP 4 406 996 A1**
(43) Date of publication of application: **31.07.2024**
(21) Application number: 22872670.9
(22) Date of filing: 01.09.2022
(51) Int. Cl.: C08J 9/04, B32B 5/18, B32B 27/34

(54) **FOAMED BODY, FOAMED FILM, AND LAMINATED FILM**

(30) Priority: 22.09.2021 JP 2021154058
(71) Applicant: Polyplastics-Evonik Corporation, Tokyo, 163-0913 (JP); Inoac Corporation, Nagoya-shi, Aichi 450-0003 (JP)
(72) Inventor: AKASHI, Tatsuki, Tokyo 163-0913 (JP); MUTSUDA, Mitsuteru, Tokyo 108-8230 (JP); TANAKA, Keisuke, Anjo-shi, Aichi 446-8504 (JP); NISHIMURA, Hiroyuki, Anjo-shi, Aichi 446-8504 (JP); KONDO, Yuji, Anjo-shi, Aichi 446-8504 (JP)
(74) Representative: Grünecker Patent- und Rechtsanwälte PartG mbB
(86) International application number: PCT/JP2022/033016
(87) International publication number: WO 2023/047914

(57) **Abstract**

The present disclosure provides a foamed body or the like, the foamed body containing polyether ether ketone and polyetherimide, in which a ratio of the mass of the polyether ether ketone to the mass of the polyetherimide is from 50/50 to 87/13.

## Description

### Technical Field

The present disclosure relates to a foamed body, a foamed film, and a laminated film.

### Background Art

Typically, for example, a foamed body containing predetermined percentages of a component (a) of which at least one of the crystal melting temperature, the glass transition temperature, and the liquid crystal transition temperature is 260°C or greater and a component (b), which is an amorphous resin having a glass transition temperature of 230°C or lower, is used as a foamed body for a printed circuit board (for example, see Patent Document 1).

The foamed body for a printed circuit board is usually in the form of a film, that is, a foamed film.

Furthermore, the foamed film is used as a printed circuit board in a single layer, or a laminated film in which a foamed film and a conductive foil are laminated is used as a printed circuit board.

### Citation List

### Patent Document

Patent Document 1: JP 2008-303247 A

### Summary of Invention

### Technical Problem

In a next-generation mobile communication system (for example, a fifth generation mobile communication system (5G), a sixth generation mobile communication system (6G), or the like), a printed circuit board having lower transmission loss than ever before may be required. That is, a printed circuit board having a more excellent insulating property than ever before may be required.

In the past, lead-containing solder was primarily used for soldering on a printed circuit board, but in recent years, lead-free solder is primarily used.

Since the melting point of a lead-free solder is higher than that of a lead-containing solder, a printed circuit board having excellent heat resistance may be required.

Therefore, excellent insulating properties and heat resistance may be required for a foamed body for a printed circuit board and a foamed film for a printed circuit board.

In addition, foamed bodies and foamed films having excellent insulating properties and heat resistance may be required not only in applications in printed circuit boards but in other applications as well.

However, foamed bodies and foamed films having excellent insulating properties and excellent heat resistance have not been sufficiently investigated thus far.

Accordingly, an object of the present disclosure is to provide a foamed body and a foamed film having excellent insulating properties and heat resistance, and a laminated film including a layer formed of the foamed film.

### Solution to Problem

A first aspect of the present disclosure pertains to a foamed body containing polyether ether ketone and polyetherimide, in which a ratio of a mass of the polyether ether ketone to a mass of the polyetherimide is from 50/50 to 87/13.

Preferably, the foamed body has a dielectric constant of 2.4 or less.

A second aspect of the present disclosure pertains to a foamed body containing polyether ether ketone and polyetherimide, in which the foamed body has a dielectric constant of 2.4 or less.

Preferably, a ratio of a mass of polyether ether ketone to a mass of polyetherimide is greater than or equal to 50/50.

Preferably, the foamed body has an expansion ratio of 1.3 times or greater.

A third aspect of the present disclosure pertains to a foamed film formed of the foamed body, the foamed film having a thickness from 50 µm to 500 µm.

Preferably, the thickness is from 100 µm to 300 µm.

A fourth aspect of the present disclosure pertains to a laminated film including two or more layers laminated, the laminated film including a layer formed of the foamed film.

### Advantageous Effects of Invention

According to the present disclosure, a foamed body and a foamed film having excellent insulating properties and heat resistance, and a laminated film including a layer formed of the foamed film can be provided.

### Brief Description of Drawings

FIG. 1 is a cross-sectional photograph of a foamed film of Example 1.
FIG. 2 is a cross-sectional photograph (magnified photograph of FIG. 1) of the foamed film of Example 1.
FIG. 3 is a cross-sectional photograph (magnified photograph of FIG. 2) of the foamed film of Example 1.

### Description of Embodiments

Hereinafter, an embodiment of the present disclosure will be described with reference to the attached drawings.

It should be noted that the respective configurations and the combinations thereof in the respective embodiments are only examples, and the configurations may be added, omitted, substituted, or otherwise modified as appropriate within a scope that does not depart from the spirit of the present disclosure. The present disclosure is not limited by the embodiments and is limited only by the claims.

Each aspect disclosed in the present specification can be combined with any other feature disclosed herein.

The foamed bodies and the foamed films according to a first embodiment and a second embodiment as the present embodiment will be described using, as an example, a case in which the foamed body is a foamed film for a printed circuit board.

### Foamed Body and Foamed Film According to First Embodiment

A foamed film, which is a foamed body according to the first embodiment, will be described first.

The foamed body according to the first embodiment contains polyether ether ketone (PEEK) and polyetherimide (PEI).

A ratio of the mass of the polyether ether ketone (PEEK) to the mass of the polyetherimide (PEI) is from 50/50 to 87/13.

The foamed body according to the first embodiment is formed of a polymer composition containing polyether ether ketone (PEEK) and polyetherimide (PEI).

The foamed body according to the first embodiment is obtained by foaming a foamable polymer body by heating.

The foamable polymer body is a foamable polymer body in which a polymer body is impregnated with a pressurized gas or a supercritical fluid.

The polymer body is formed of the polymer composition.

The polyether ether ketone (PEEK) is represented by the following formula (1). In the following formula (1), n is a positive integer of 2 or greater.

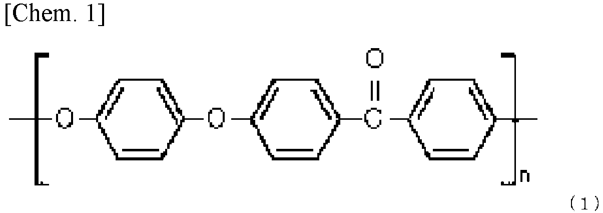

The number average molecular weight of the polyether ether ketone (PEEK) is not particularly limited as long as a foamed body having a desired shape can be produced, and is, for example, 5000 or greater (for example, from 5000 to 1000000), preferably 8000 or greater (for example, from 10000 to 500000), and more preferably 15000 or greater (for example, from 20000 to 100000).

Note that, in the first embodiment, the number average molecular weight is measured from a molecular weight distribution calibrated with polystyrene using gel permeation chromatography (GPC) in which a chloroform eluent is used. For a column for use in the GPC, a column appropriate for measuring the molecular weight may be used.

The melt viscosity (shear rate: 1000 sec⁻¹, temperature: 400°C) of the polyether ether ketone (PEEK) is preferably 0.05 kNsm⁻² or greater, and more preferably 0.10 kNsm⁻² or greater.

In addition, the melt viscosity (shear rate: 1000 sec⁻¹, temperature: 400°C) of the polyether ether ketone (PEEK) is preferably 0.50 kNsm⁻² or less, and more preferably 0.45 kNsm⁻² or less.

Note that in the first embodiment, the melt viscosity is measured with a capillary die (method A) in accordance with JIS K7199:1999 (ISO 11443:1995) "Plastics-Determination of the fluidity of plastics using capillary and slit-die rheometers".

The melt volume flow rate (MVR) (temperature: 380°C, load: 5 kg) of the polyether ether ketone (PEEK) is preferably from 5 to 200 cm³/10 min, and more preferably from 10 to 30 cm³/10 min.

In the first embodiment, the melt volume flow rate (MVR) is measured according to ISO 1133.

The polyetherimide (PEI) is represented by the following formula (2). In the following formula (2), m is a positive integer of 2 or greater.

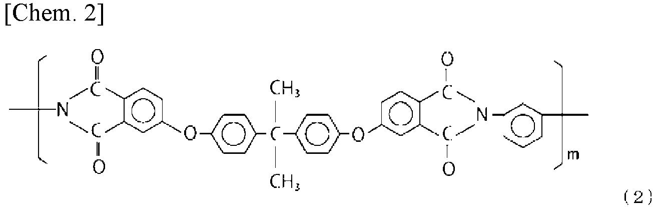

The polymer composition may contain another polymer other than polyether ether ketone (PEEK) and polyetherimide (PEI) within a range that does not impair the effects of the present disclosure.

Examples of the other polymer include polyether ketone (PEK), polyaryl ketone (PAK), polyphenylene sulfide (PPS), polyethylene terephthalate (PET), polyamide-imide (PAI), wholly aromatic polyester (PE), polysulfone (PSF), polyacrylate (PA), polyether sulfone (PES), polycarbonate (PC), modified polyphenylene ether (modified PPE), and polyphenyl sulfone (PPSU).

The polymer composition may contain additives within a range that does not impair the effects of the present disclosure.

Examples of the additives include an inorganic filler, a heat stabilizer, an ultraviolet absorber, a light stabilizer, a nucleating agent, a colorant, a lubricant, and a flame retardant.

Examples of the inorganic filler include talc, mica, clay, glass, alumina, silica, aluminum nitride, and silicon nitride.

The polymer composition contains the polyether ether ketone (PEEK) and the polyetherimide (PEI) in a total amount of preferably 50 mass% or more, more preferably 70 mass% or more, still more preferably 80 mass% or more, and particularly preferably 90 mass% or more.

The ratio of the mass of the polyether ether ketone (PEEK) to the mass of the polyetherimide (PEI) is from 50/50 to 87/13, preferably from 60/40 to 85/15, and more preferably from 70/30 to 80/20.

The expansion ratio of the foamed body according to the first embodiment is preferably 1.30 times or greater, and more preferably 1.40 times or greater.

A larger expansion ratio of the foamed body according to the first embodiment is preferable, but the expansion ratio is also, for example, 10 times or less, and is specifically 6.0 times or less.

The expansion ratio of the foamed body is a value obtained by dividing the "relative density of a below-described polymer body before foaming" by the "relative density of the foamed body after foaming".

The relative density (density) of the foamed body is determined in accordance with Method A (water displacement method) of JIS K7112:1999 "Plastics-Methods of determining the density and relative density of non-cellular plastics".

The relative density of the polymer body is also determined in accordance with Method A (water displacement method) of JIS K7112:1999 "Plastics-Methods of determining the density and relative density of non-cellular plastics".

The relative density of the polymer body may be measured using the polymer body before the foamed body is obtained, or, in a case in which only the foamed body after foaming is available, a polymer body may be prepared by hot pressing the foamed body, and the relative density may then be measured using the obtained polymer body.

The average foam cell diameter of the foamed body according to the first embodiment is preferably 3 µm or less, more preferably from 5 nm to 3 µm, still more preferably from 10 nm to 2 µm, and particularly preferably from 20 nm to 1 µm.

Since the average foam cell diameter of the foamed body according to the first embodiment is 3 µm or less, a plurality of via holes are formed in the foamed film, which is the foamed body, and in a case in which the plurality of via holes are filled with a conductive paste, the conductive paste filled in one via hole is suppressed from passing through a foam cell and coming into contact with the conductive paste filled in another via hole, in other words, internal short circuiting can be suppressed.

The average foam cell diameter of the foamed body according to the first embodiment can be determined as follows.

First, the foamed body (foamed film) is cut, and the vicinity of the center of the cut surface is photographed with a scanning electron microscope (SEM). Next, 50 or more foam cells are randomly selected on the cut surface, and the surface area of each foam cell is determined. Then, from the surface area of each foam cell, the diameter of each foam cell is calculated assuming that the foam cells on the cut surface are circular. Next, the arithmetic mean value of the foam cells is determined from the diameter of each foam cell, and the arithmetic mean value of the foam cells is used as the average foam cell diameter of the foamed body.

As the scanning electron microscope (SEM), for example, the scanning electron microscope S-4500 available from Hitachi, Ltd. can be used. An image processing software, for example, can be used to determine the surface area of each foam cell. As the image processing software, for example, Image-Pro Plus available from Nihon Visual Science, Inc. can be used.

The dielectric constant of the foamed body according to the first embodiment is preferably 2.4 or less, more preferably 2.3 or less, even more preferably 2.2 or less, particularly preferably 2.1 or less, and more particularly preferably 2.0 or less.

When the dielectric constant is equal to or less than the preferable values described above, the foamed body according to the first embodiment has an enhanced insulating property, and as a result, can be suitably used for a printed circuit board in a next-generation communication system.

The foamed body according to the first embodiment preferably has a dielectric constant as low as possible.

The dielectric constant of the foamed body is measured at 1 MHz by an electrode non-contact method in accordance with ASTM D150 "Standard Test Methods for AC Loss Characteristics and Permittivity (Dielectric Constant) of Solid Electrical Insulation".

For example, the dielectric constant of the foamed body can be measured at 1 MHz by the electrode non-contact method using an LCR meter ("E4980A" available from Keysite Technologies, Inc.) equipped with a dielectric test fixture (" 16451B" available from Keysite Technologies, Inc.).

The thickness of the foamed film, which is the foamed body according to the first embodiment, is preferably from 50 µm to 500 µm, and more preferably from 100 µm to 300 µm.

Since the thickness is from 50 µm to 500 µm, the foamed film according to the first embodiment can be suitably used for a printed circuit board.

In addition, when the thickness is set to 300 µm or less, the foamed film according to the first embodiment can be particularly suitably used for a printed circuit board that is required to be thin.

The foamed body (foamed film) according to the first embodiment is configured as described above. Next, a method for producing the foamed body (foamed film) according to the first embodiment will be described.

In the method for producing a foamed body (foamed film) according to the first embodiment, first, a polymer body (polymer film) is molded from the polymer composition.

Examples of the molding method for molding a polymer film from the polymer composition include extrusion cast molding and calender molding. A T-die can be used in the extrusion cast molding.

The molding temperature in the extrusion cast molding is equal to or higher than the flow initiation temperature, and is preferably in a range from the "flow initiation temperature + 20°C" to 430°C.

Next, the polymer body (polymer film) is impregnated with a pressurized gas or a supercritical fluid to thereby obtain a foamable polymer body (foamable polymer film).

Examples of the pressurized gas or supercritical fluid include carbon dioxide, nitrogen (N₂), helium, argon, nitrous oxide, ethylene, ethane, tetrafluoroethylene, perfluoroethane, tetrafluoromethane, trifluoromethane, 1,1-difluoroethylene, trifluoroamide oxide, cis-difluorodiamine, trans-difluorodiamine, nitrogen chloride difluoride, tritiated phosphorus, dinitrogen tetrafluoride, ozone, phosphine, nitrosyl fluoride, nitrogen trifluoride, deuterium chloride, xenon, sulfur hexafluoride, fluoromethane, pentafluoroethane, 1,1-difluoroethene, diborane, water, tetrafluorohydrazine, silane, silicon tetrafluoride, germanium tetrahydride, boron trifluoride, carbonyl fluoride, chlorotrifluoromethane, bromotrifluoromethane, and vinyl fluoride.

The pressurized gas or supercritical fluid is preferably carbon dioxide, nitrogen, nitrous oxide, ethylene, ethane, tetrafluoroethylene, perfluoroethane, tetrafluoromethane, trifluoromethane, or 1,1-difluoroethylene.

Moreover, the pressurized gas or supercritical fluid is particularly preferably carbon dioxide, nitrogen, helium, or argon.

From the viewpoint of suppressing deformation of the polymer body (polymer film), the temperature at which the polymer body (polymer film) is impregnated with the pressurized gas or the supercritical fluid is preferably equal to or lower than the glass transition temperature of the polymer body (polymer film).

The time for which the polymer body (polymer film) is impregnated with the pressurized gas or supercritical fluid depends on details such as the thickness of the polymer body (polymer film), but is preferably 5 minutes or more, and more preferably 30 minutes or more.

Moreover, from the viewpoint of productivity, the time for which the polymer body (polymer film) is impregnated with the pressurized gas or the supercritical fluid is preferably 48 hours or less, more preferably 24 hours or less, and even more preferably 12 hours or less.

The foamable polymer body (foamable polymer film) is heated to vaporize the impregnated pressurized gas or supercritical fluid, and thus the foamed body (foamed film) is obtained. The heating is carried out in a non-pressurizing state.

Examples of the device used for the heating include a hot-air circulating heat treatment furnace, a heat press, an oil bath, and a salt bath.

The heating temperature is preferably from 150°C to 350°C, and more preferably from 170°C to 250°C.

The heating time may be set to a time at which foaming is completed.

The foamed body (foamed film) is preferably obtained by vaporizing the pressurized gas or the supercritical fluid impregnated in the polymer body (polymer film) and then cooling to around room temperature the foamable polymer body (foamable polymer film) that has been foamed.

In addition, preferably, after the foamable polymer body (foamable polymer film) that has been foamed is cooled to around room temperature, the foamable polymer body (foamable polymer film) is heated and crystallized to obtain a foamed body (foamed film).

The foamed body according to the first embodiment is configured as described above, and thus has the following advantages.

The foamed body according to the first embodiment contains polyether ether ketone (PEEK) and polyetherimide (PEI).

The ratio of the mass of the polyether ether ketone (PEEK) to the mass of the polyetherimide (PEI) is from 50/50 to 87/13.

The melting point of the polyether ether ketone (PEEK) is higher than the glass transition temperature of the polyetherimide (PEI).

The foamed body according to the first embodiment contains polyether ether ketone (PEEK), and thus excels in heat resistance.

In particular, when the ratio of the mass of the polyether ether ketone (PEEK) to the mass of the polyetherimide (PEI) in the foamed body according to the first embodiment is 50/50 or greater, that is, when the foamed body according to the first embodiment contains a large amount of polyether ether ketone (PEEK), the foamed body according to the first embodiment exhibits more excellent heat resistance.

The foamed body is obtained by foaming the foamable polymer composition through heating.

Further, as described above, the melting point of the polyether ether ketone (PEEK) is higher than the glass transition temperature of the polyetherimide (PEI).

When the ratio of the mass of the polyether ether ketone (PEEK) to the mass of polyetherimide (PEI) in the foamed body according to the first embodiment is 85/15 or less, that is, when the foamable polymer composition used for preparing the foamed body contains a large amount of polyetherimide (PEI), the foamable polymer composition is easily softened and easily foamed when the foamable polymer composition is heated in order to foam the foamable polymer composition. In addition, since polyetherimide (PEI) and polyether ether ketone (PEEK) exhibit excellent miscibility, this excellent miscibility also facilitates foaming of the foamable polymer composition. As a result, the expansion ratio of the obtained foamed body is increased.

In addition, air has a lower dielectric constant than the polymers including polyether ether ketone (PEEK) and polyetherimide (PEI), but the dielectric constants of polyether ether ketone (PEEK) and polyetherimide (PEI) are approximately the same. Therefore, since the foamed body containing the polyether ether ketone (PEEK) and the polyetherimide (PEI) has a high expansion ratio, the foamed body has a low dielectric constant.

Thus, the foamed body according to the first embodiment has a high expansion ratio, and therefore the foamed body according to the first embodiment has a low dielectric constant.

In addition, since the hygroscopicity of polyether ether ketone (PEEK) is low, a decrease in insulating properties due to moisture can be suppressed.

Accordingly, the foamed body according to the first embodiment exhibits excellent insulating properties.

As described above, the foamed body according to the first embodiment excels in insulating properties and heat resistance.

### Foamed Body and Foamed Film According to Second Embodiment

Next, a foamed body and a foamed film according to a second embodiment will be described.

Note that descriptions that are duplicated from the first embodiment will be omitted, and matters that are not particularly described in the second embodiment are considered to be the same as those described in the first embodiment.

The foamed film, which is the foamed body according to the second embodiment, contains polyether ether ketone (PEEK) and polyetherimide (PEI).

The dielectric constant of the foamed body according to the second embodiment is 2.4 or less.

The dielectric constant of the foamed body according to the second embodiment is preferably 2.3 or less, more preferably 2.2 or less, even more preferably 2.1 or less, and particularly preferably 2.0 or less.

The ratio of the mass of the polyether ether ketone (PEEK) to the mass of the polyetherimide (PEI) is preferably from 50/50 to 87/13, more preferably from 60/40 to 85/15, and even more preferably from 70/30 to 80/20.

The foamed body according to the second embodiment is configured as described above, and thus has the following advantages.

The foamed body according to the second embodiment contains polyether ether ketone (PEEK) and polyetherimide (PEI).

The dielectric constant of the foamed body according to the second embodiment is 2.4 or less.

The melting point of the polyether ether ketone (PEEK) is higher than the glass transition temperature of the polyetherimide (PEI).

The foamed body according to the second embodiment contains polyether ether ketone (PEEK), and thus excels in heat resistance.

When the dielectric constant is 2.4 or less, the foamed body according to the second embodiment excels in insulating properties.

The foamed body is obtained by foaming the foamable polymer composition through heating.

Further, as described above, the melting point of the polyether ether ketone (PEEK) is higher than the glass transition temperature of the polyetherimide (PEI).

The foamable polymer composition used for preparing the foamed body according to the second embodiment contains polyetherimide (PEI), and thus the foamable polymer composition is easily softened and easily foamed when the foamable polymer composition is heated in order to foam the foamable polymer composition. In addition, since polyetherimide (PEI) and polyether ether ketone (PEEK) are excellent in miscibility, this excellent miscibility also facilitates foaming of the foamable polymer composition. As a result, the expansion ratio of the obtained foamed body is increased.

In addition, air has a lower dielectric constant than polymers including polyether ether ketone (PEEK) and polyetherimide (PEI), but the dielectric constants of polyether ether ketone (PEEK) and polyetherimide (PEI) are approximately the same. Therefore, since the foamed body containing the polyether ether ketone (PEEK) and the polyetherimide (PEI) has a high expansion ratio, the foamed body has a low dielectric constant.

Thus, when the foamed body according to the second embodiment contains polyetherimide (PEI), the expansion ratio is easily increased, and as a result, the dielectric constant is easily reduced to 2.4 or less.

In addition, since the hygroscopicity of polyether ether ketone (PEEK) is low, a decrease in insulating properties due to moisture can be suppressed.

Accordingly, the foamed body according to the second embodiment exhibits excellent insulating properties.

As described above, the foamed body according to the second embodiment excels in insulating properties and heat resistance.

### Laminated Film

The laminated film according to the present embodiment is a laminated film including two or more layers laminated.

The laminated film according to the present embodiment includes a first layer formed of the foamed film according to the present embodiment.

Further, the laminated film according to the present embodiment includes a second layer formed of a conductive foil.

The conductive foil is formed from copper, for example.

The first layer and the second layer may be adhered to each other by thermal fusion bonding or may be adhered to each other via an adhesive.

A conductive circuit may be formed in the second layer.

The conductive circuit can be formed in the second layer by a known method such as a subtractive method (etching), an additive method (plating), a die stamping method (mold), or a conductor printing method (conductive paste).

The foamed body, the foamed film, and the laminated film according to an embodiment of the present disclosure can be variously modified within a scope that does not depart from the gist of the present disclosure.

The foamed body according to the present embodiment is used for a printed circuit board, but the foamed body according to an embodiment of the present disclosure may be, for example, an insulating film for covering an electric wire.

In addition, the foamed body according to the present embodiment is a foamed film, but the foamed body according to an embodiment of the present disclosure may have, for example, a tubular shape.

### Examples

Next, the present disclosure will be described more specifically with reference to examples and comparative examples. Note that the present disclosure is not to be considered limited to these examples at all.

### Materials

PEEK: polyether ether ketone (VESTAKEEP (trade name) 1000G, VESTAKEEP (trade name) 2000G, VESTAKEEP (trade name) 3300G, VESTAKEEP (trade name) L4000G, VESTAKEEP (trade name) 5000G, available from Daicel-Evonik Ltd.)
PEI: polyetherimide (ULTEM1000 available from SABIC)
PEKK: polyetherketoneketone (Kstone PEKK6A114, available from Shandong Kaisheng New Materials Co., Ltd.)
PPSU: polyphenylsulfone (Ultrason P3010, available from BASF SE)
Note that the melt volume flow rate (MVR) of polyether ether ketone (PEEK) is as follows.
VESTAKEEP (trade name) 1000G: 150 cm³/10 min
VESTAKEEP (trade name) 2000G: 70 cm³/10 min
VESTAKEEP (trade name) 3300G: 20 cm³/10 min
VESTAKEEP (trade name) L4000G: 12 cm³/10 min
VESTAKEEP (trade name) 5000G: 7 cm³/10 min

### Examples and Comparative Examples

In each example and comparative example, a resin composition was obtained by premixing PEEK and other resins at the ratios (parts by mass) listed in Table 1, and then melt-kneading the mixture using a twin-screw extruder (ϕ: 25 mm, L/D: 40) under conditions including a cylinder temperature of 380°C and a screw rotation speed of 200 rpm.

The resin composition was compression molded using a hot press machine at 380°C and 60 MPa, and a polymer film having the relative density and thickness described in Table 1 below was prepared.

The polymer film was inserted into a pressure vessel (temperature setting: 100°C), and the inside of the pressure vessel was pressurized with carbon dioxide (CO₂) or nitrogen (N₂) for 1 to 2 hours to impregnate the polymer film with carbon dioxide (CO₂) or nitrogen (N₂) in a supercritical fluid state.

The pressure (gauge pressure) at the time of pressurization was set to 20 MPa when carbon dioxide (CO₂) was used, and was set to 70 MPa when nitrogen (N₂) was used.

Then, the leak valve of the pressure vessel was fully opened, the pressure inside the pressure vessel was released at a decompression rate of 1 MPa/sec, and a foamable polymer film was removed from the pressure vessel.

Subsequently, the foamable polymer film was heated with a hot plate at a predetermined temperature (foaming temperature: temperature shown in Table 1 below) for 1 minute and foamed.

The surface of the foamable polymer film that was foamed was then cooled, and a foamed film having the relative density and thickness described in in Table 1 below was obtained.

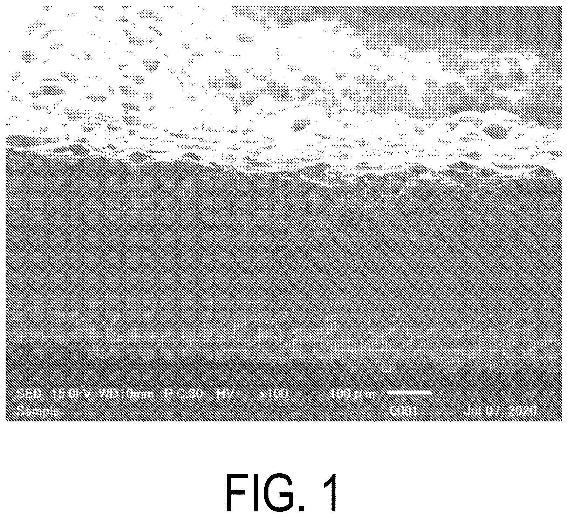

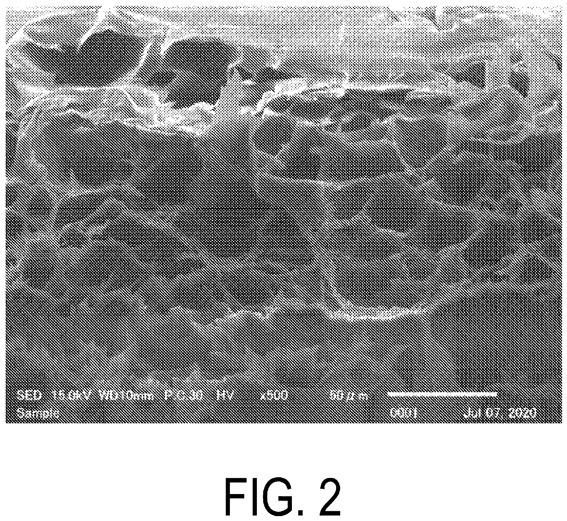

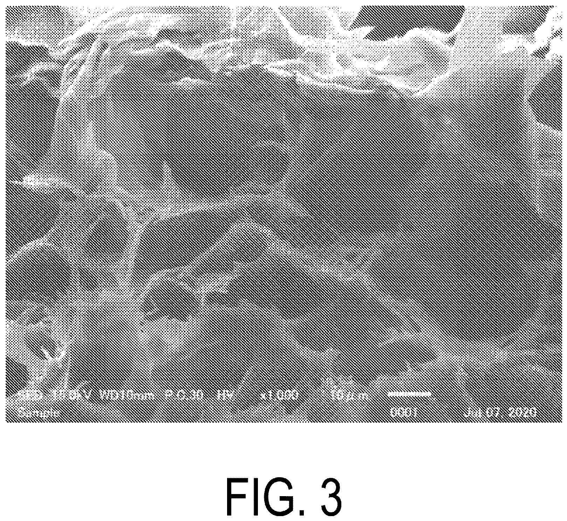

With regard to the foamed film of Example 1, the foamed film was cut, and the cut surface was photographed with a scanning electron microscope (SEM). Photographs at different photographic magnifications are shown in FIGS. 1 to 3.

### Crystallization Temperature

Using a differential scanning calorimeter (X-DSC7000, available from SII Nanotechnology, Inc.), each resin composition (4.5 to 10.0 mg) prior to impregnation with the supercritical fluid was maintained at 30°C for one minute, after which the temperature was increased at a temperature increase rate of 20°C/min and maintained at 410°C for one minute, and then the resin composition was cooled at a cooling rate of 10°C/min, and the calorific value was measured. The temperature at the peak of the calorific value initially obtained in the cooling process was used as the crystallization temperature.

### (Expansion Ratio)

The expansion ratios of the foamed films of the Examples and Comparative Examples were determined by the above-described method.

The expansion ratios are presented in Table 1 below.

**[Table 1]**

| | Material | | | | Supercritical Fluid | Foaming Temperature (°C) | Relative Density of Polymer Film | Relative Density of Foamed Film | Expansion Ratio | Polymer Film Thickness | Foamed Film Thickness | Crystallization Temperature (°C) |
|---|---|---|---|---|---|---|---|---|---|---|---|---|
| | PEEK | | Polymer other than PEEK | | | | | | | | | |
| | Product No | Part by mass | Material | Part by mass | | | (-) | (-) | (-) | (µm) | (µm) | |
| Example 1 | | | | | CO₂ | 250 | 1.28 | 0.90 | 1.42 | 270 | 290 | |
| Example 2 | | | | | CO₂ | 230 | 1.28 | 0.85 | 1.51 | 260 | 290 | |
| Example 3 | | 80 | | 20 | CO₂ | 200 | 1.28 | 0.75 | 1.71 | 280 | 320 | 284 |
| Example 4 | | | | | CO₂ | 200 | 1.28 | 0.73 | 1.75 | 280 | 330 | |
| Example 5 | 3300G | | | | CO₂ | | 1.28 | 0.34 | 3.76 | 300 | 450 | |
| Example 6 | | | | | CO₂ | 350 | 1.28 | 0.28 | 4.51 | 200 | 310 | |
| Example 7 | | 70 | | 30 | CO₂ | | 1.28 | 0.61 | 2.10 | 200 | 250 | 281 |
| Example 8 | | 60 | | 40 | CO₂ | | 1.28 | 0.25 | 504 | 200 | 330 | 270 |
| Example 9 | | 80 | | 20 | CO₂ | 200 | 1.28 | 0.65 | 1.97 | 200 | 240 | 284 |
| Example 10 | 1000G | 80 | PEI | 20 | CO₂ | | 1.28 | 064 | 200 | 200 | 240 | 292 |
| Example 11 | 2000G | 80 | | 20 | CO₂ | | 1.28 | 0.64 | 200 | 200 | 240 | 291 |
| Example 12 | L4000G | 80 | | 20 | CO₂ | 260 | 1.28 | 0.64 | 200 | 200 | 240 | 285 |
| Example 13 | 5000G | 80 | | 20 | CO₂ | | 1.28 | 0.64 | 200 | 200 | 240 | 284 |
| Example 14 | | 85 | | 15 | CO₂ | | 1.28 | 0.64 | 200 | 200 | 240 | 288 |
| Example 15 | | 75 | | 25 | CO₂ | | 1.28 | 0.64 | 200 | 200 | 240 | 282 |
| Example 16 | | 80 | | 20 | N₂ | 250 | 1.28 | 0.66 | 1.94 | 100 | 110 | 284 |
| Example 17 | 3300G | 80 | | 20 | N₂ | 250 | 1.28 | 0.76 | 1.68 | 50 | 58 | 284 |
| Example 18 | | 50 | | 50 | CO₂ | 350 | 1.28 | 0.70 | 1.80 | 200 | 220 | 268 |
| Comparative Example 1 | | 90 | | 10 | CO₂ | 260 | 1.28 | 1.00 | 1.28 | 200 | 205 | 290 |
| Comparative Example 2 | | 100 | - | 0 | CO₂ | 350 | 1.30 | 1.21 | 1.07 | 300 | 302 | 292 |
| Comparative Example 3 | | 80 | PEKK | 20 | CO₂ | 350 | 1.28 | 1.00 | 1.28 | 200 | 205 | 291 |
| Comparative Example 4 | 3300G | 80 | PPSU | 20 | CO₂ | 350 | 126 | 1.04 | 1.21 | 200 | 205 | 284 |
| Comparative Example 5 | 3300G | 40 | PEI | 60 | CO₂ | 350 | 1.28 | 0.74 | 1.73 | 200 | 230 | Absent |
| Comparative Example 6 | 3300G | 30 | PEI | 70 | CO₂ | 350 | 1.28 | 0.45 | 2.84 | 200 | 270 | Absent |

### Dielectric Constant

The dielectric constants of the foamed films of Examples 1 to 18 were determined by the above-described method.

The dielectric constants of the foamed films of Examples 1 to 4 are listed in Table 2 below.

**[Table 2]**

| | Dielectric Constant of Foamed Film (-) |
|---|---|
| Example 1 | 2.3 |
| Example 2 | 2.2 |
| Example 3 | 2.0 |
| Example 4 | 2.0 |

As listed in Table 1, in comparison to the foamed body that is the foamed film of Comparative Example 1 in which the amount of polyetherimide (PEI) was small, the foamed body that is the foamed film of Comparative Example 2 in which polyetherimide (PEI) was not used, and the foamed bodies that are the foamed films of Comparative Examples 3 and 4 in which polyetherketoneketone (PEKK) or polyphenylsulfone (PPSU) was used instead of polyetherimide (PEI), the foamed bodies that are the foamed films of Examples 1 to 18 had higher expansion ratios.

Therefore, it can be found that the foamed bodies that are the foamed films of Examples 1 to 18 exhibit excellent insulating properties.

As listed in Table 2, the dielectric constant of each of Examples 1 to 4 was 2.3 or less. The dielectric constant of each of Examples 5 to 18 was 2.3 or less.

As listed in Table 1 above, the crystallization temperatures of the resin compositions constituting the foamed bodies that are the foamed films of Examples 1 to 18 could be measured. On the other hand, the crystallization temperatures of the resin compositions constituting the foamed bodies that are the foamed films of Comparative Examples 5 and 6 in which the amount of polyether ether ketone (PEEK) was small could not be measured.

Therefore, it is clear that the resin compositions constituting the foamed bodies that are the foamed films of Examples 1 to 18 have higher crystallinity, or in other words, more excellent heat resistance, than the resin compositions constituting the foamed bodies that are the foamed films of Comparative Examples 5 and 6.

Therefore, according to the present disclosure, a foamed body having excellent insulating properties and heat resistance can be provided.

### Disclosed Aspects

Each of the following aspects is a disclosure of a preferred embodiment.

### Aspect 1

A foamed body containing polyether ether ketone and polyetherimide with a ratio of a mass of the polyether ether ketone to a mass of the polyetherimide being from 50/50 to 87/13.

### Aspect 2

The foamed body according to aspect 1, wherein the foamed body has a dielectric constant of 2.4 or less.

### Aspect 3

A foamed body containing polyether ether ketone and polyetherimide and having a dielectric constant of 2.4 or less.

### Aspect 4

The foamed body according to aspect 3, wherein a ratio of a mass of the polyether ether ketone to a mass of the polyetherimide is 50/50 or greater.

### Aspect 5

The foamed body according to any one of aspects 1 to 4, wherein the foamed body has an expansion ratio of 1.30 times or greater.

### Aspect 6

A foamed film formed of the foamed body described in any one of aspects 1 to 5, the foamed film having a thickness from 50 µm to 500 µm.

### Aspect 7

The foamed film according to aspect 6, wherein the thickness is from 100 µm to 300 µm.

### Aspect 8

A laminated film including two or more layers laminated, wherein the laminated film includes a layer formed of the foamed film described in aspect 6 or 7.

## Claims

1. A foamed body comprising polyether ether ketone and polyetherimide with a ratio of a mass of the polyether ether ketone to a mass of the polyetherimide being from 50/50 to 87/13.

2. The foamed body according to claim 1, wherein the foamed body has a dielectric constant of 2.4 or less.

3. A foamed body comprising polyether ether ketone and polyetherimide and having a dielectric constant of 2.4 or less.

4. The foamed body according to claim 3, wherein a ratio of a mass of the polyether ether ketone to a mass of the polyetherimide is 50/50 or greater.

5. The foamed body according to any one of claims 1 to 4, wherein the foamed body has an expansion ratio of 1.30 times or greater.

6. A foamed film formed of the foamed body described in any one of claims 1 to 4, the foamed film having a thickness from 50 µm to 500 µm.

7. The foamed film according to claim 6, wherein the thickness is from 100 µm to 300 µm.

8. A laminated film comprising two or more layers laminated, wherein the laminated film comprises a layer formed of the foamed film described in claim 6.
